# EUROPÄISCHE PATENTSCHRIFT

(11) **EP 1 533 937 B1**
(45) Veröffentlichungstag und Bekanntmachung des Hinweises auf die Patenterteilung: **29.07.2009**
(21) Anmeldenummer: 04027594.3
(22) Anmeldetag: 19.11.2004
(51) Int. Cl.: H04L 9/32

(54) **Verfahren zum Authentifizieren eines Gegenstands**
Method for authenticating an object
Procédé d'authentification d'un objet

(30) Priorität: 19.11.2003 DE 10354144
(43) Veröffentlichungstag der Anmeldung: 25.05.2005
(73) Patentinhaber: Authentidate International AG, 40472 Düsseldorf (DE)
(72) Erfinder: Wendenburg, Jan C., 40219 Düsseldorf (DE); Willems, Marc T., 42653 Solingen (DE); Dahm, Percy, Dr., 44577 Castrop-Rauxel (DE)
(74) Vertreter: Stute, Ivo Peter

(56) Entgegenhaltungen:
- EP-A- 0 982 688
- EP-A- 1 205 405
- PATENT ABSTRACTS OF JAPAN Bd. 2003, Nr. 12, 5. Dezember 2003 (2003-12-05) & JP 2004 135058 A (NIPPON TELEGR & TELEPH CORP <NTT>), 30. April 2004 (2004-04-30)

## Beschreibung

Die Erfindung betrifft ein Verfahren zum Authentifizieren eines Gegenstands.

Die seitens eines Herstellers zugesicherte Qualität und die Betriebssicherheit eines Gerätes hängen von der Qualität seiner Komponenten ab. Insbesondere bei Geräten, die gewartet werden müssen und bei denen regelmäßig Verschleißteile zu ersetzen sind, besteht das Problem, dass ihre Betriebssicherheit aufgrund des Einsatzes von Ersatzteilen minderer Qualität erheblich herabgesetzt sein kann. Gerade in der Fahrzeugtechnik und insbesondere in der Flugzeugtechnik sind gefälschte Ersatzteile im Umlauf, die als qualitativ hochwertig angeboten werden, tatsächlich aber den geforderten Qualitätsansprüchen nicht entsprechen und damit die Betriebssicherheit des Fahrzeuges erheblich beeinträchtigen.

Es gibt verschiedene Lösungsansätze, Produkte fälschungssicher zu machen. Der gängige Ansatz besteht darin, das Produkt mit einem oder mehreren optischen Merkmalen zu versehen, die nicht ohne Weiteres zu fälschen sind. Insbesondere bei der Herstellung von Geldscheinen werden vielfältige optische Mittel verwendet, um eine Fälschungssicherheit zu gewährleisten. Es hat sich allerdings gezeigt, dass selbst neueste Methoden nicht ausreichen, um eine ausreichende Fälschungssicherheit zu gewährleisten. Hinzu kommt, dass die Kosten mit zunehmender Komplexität der verwendeten optischen Merkmale steigen.

In der EP 0 982 688 A1 sind Transponder beschrieben, die einen ersten, nicht auslesbaren, digitalen Schlüssel enthalten und mit denen ein Ausgangswert mit dem ersten Schlüssel verschlüsselt werden kann. Der von einem solchen Transponder verschlüsselte Ausgangswert kann mit einem zweiten digitalen Schlüssel zu einem Endwert entschlüsselt und die Echtheit des Transponders bejaht werden, wenn der Ausgangswert mit dem Endwert übereinstimmt. Solche Transponder sind insoweit fälschungssicher, als es nicht möglich ist, den Code eines spezifischen Transponders zu kopieren, um einen weiteren identischen Transponder zu erzeugen.

Aus der WO-A-03/069536 ist ein System zur Identifizierung von Fahrzeugen mittels eines Transponders bekannt, bei dem der Transponder so mit einem zumindest teilweise strukturschwachen Gehäuse ausgestattet und an einem Fahrzeug befestigt ist, dass er unbrauchbar wird und nicht mehr weiter verwendet werden kann, sobald er vom Fahrzeug entfernt wird. Hiermit soll verhindert werden, dass der Transponder nach unbefugtem Entfernen von einem Fahrzeug missbraucht werden kann. Das Identifizierungssystem ist nicht dazu geeignet, die Fälschungssicherheit von Produkten zu gewährleisten.

Somit liegt der vorliegenden Erfindung die Aufgabe zugrunde, ein vergleichsweise einfaches Verfahren zu schaffen, mit dem die Authentizität eines Gegenstands, insbesondere eines Ersatzteils, überprüft werden kann.

Diese Aufgabe wird gelöst mit einem Verfahren, bei dem
a. der Gegenstand von einer die Qualität bzw. die Herkunft des Gegenstands garantierenden Instanz mit Mitteln versehen wird, die einen ersten, nicht auslesbaren, digitalen Schlüssel enthalten,
b. zur Authentifizierung des Gegenstands ein Ausgangswert mit Hilfe der besagten Mittel mit dem ersten Schlüssel verschlüsselt wird,
c. der verschlüsselte Ausgangswert mit einem von der die Qualität bzw. die Herkunft des Gegenstands garantierenden Instanz herausgegebenen zweiten digitalen Schlüssel zu einem Endwert entschlüsselt wird, und
d. die Authentizität des Gegenstands bejaht wird, wenn der Ausgangswert mit dem Endwert übereinstimmt.

Unter Authentifizieren wird hier und im Folgenden die Zuordnung eines Gegenstands zu seinem Hersteller oder der Instanz, die die Qualität des Gegenstands garantiert, verstanden.

Die die Qualität bzw. die Herkunft garantierende Instanz kann beispielsweise der Hersteller des Gegenstands, aber auch ein Großhändler, der die Herkunft der von ihm vertriebenen Gegenstände garantieren kann, oder ein die Qualität des Gegenstands prüfendes Unternehmen sein.

Unter Mitteln, die einen ersten, nicht auslesbaren, Schlüssel enthalten, werden insbesondere sämtliche elektronischen Mittel wie SmartCard-Chips oder sonstige Computer-Chips verstanden, die gegen ein Auslesen oder anderweitiges Duplizieren des darin enthaltenen privaten Schlüssels wirksam gesichert sind, aber auch alle anderen Mittel, die die gleiche Eigenschaft haben.

Als Ausgangswerte können je nach technischer Ausgestaltung des Verschlüsselungsverfahrens beliebige Zahlen- oder Zeichenfolge oder sonstige Folgen digitaler Signale in Betracht kommen.

Der Kerngedanke der Erfindung besteht darin, dass der zu authentifizierende Gegenstand mit einem Merkmal versehen wird, das nicht unmittelbar lesbar oder auf sonstige Weise mit einem Original vergleichbar ist und dennoch zur Authentifizierung verwendet werden kann. Die Authentifizierung erfolgt erfindungsgemäß über den am Gegenstand befindlichen, aber nicht lesbaren ersten Schlüssel, der erst in Verbindung mit einem zweiten, lesbaren Schlüssel mit kryptographischen Mitteln eine Authentifizierung ermöglicht. Hierzu wird ein insbesondere digitaler Ausgangswert mit dem ersten Schlüssel verschlüsselt, als verschlüsselter Wert ausgegeben, mit dem bekannten Schlüssel entschlüsselt und der erhaltene Endwert mit dem Ausgangswert verglichen. Wenn der Endwert gleich dem Ausgangswert ist, ist sichergestellt, dass der zweite Schlüssel mit dem ersten Schlüssel zusammenwirkt. Auf diese Weise kann festgestellt werden, dass der erste Schlüssel einem Originalschlüssel der die Qualität oder die Herkunft garantierenden Instanz entspricht, ohne dass eine direkte Überprüfung des ersten Schlüssels erfolgt.

Somit wird durch die Verbindung von Mitteln, die einen ersten, nicht auslesbaren, digitalen Schlüssel enthalten, mit einem Gegenstand die Möglichkeit eröffnet, kryptographische Verfahren zur Authentifizierung oder Identifizierung eines Gegenstands zu verwenden. Damit werden die Anwendungsmöglichkeiten kryptographischer Verfahren, die bislang lediglich zur Verschlüsselung von digitalen Daten verwendet wurden, erheblich erweitert.

Grundsätzlich ist es somit möglich, wahlweise jedem Gegenstand einen eigenen ersten Schlüssel zuzuordnen, so dass jeder Gegenstand nicht nur authentifiziert werden kann, sondern auch ähnlich wie durch eine Seriennummer individualisiert ist, oder aber jedem Gegenstand, der gleicher Herkunft und/oder gleicher Qualität ist, den gleichen ersten Schlüssel zuzuordnen, so dass lediglich die Herkunft bzw. die Qualität des Gegenstands durch den Schlüssel garantiert wird.

Ein wesentlicher Vorteil des erfindungsgemäßen Verfahrens besteht darin, dass das Authentifizierungsmerkmal des Gegenstands, nämlich die den ersten Schlüssel enthaltenden Mittel nicht gefälscht werden können, solange der erste Schlüssel nicht von der die Qualität bzw. die Herkunft des Gegenstands garantierenden Instanz preisgegeben wird.

Ein weiterer wesentlicher Vorteil des erfindungsgemäßen Verfahrens besteht darin, dass es wenig komplex und somit vergleichsweise kostengünstig ist, insbesondere da die Methoden der Kryptographie und hierfür verwendete Mittel hinlänglich bekannt sind.

Grundsätzlich ist es möglich, dass der erste und der zweite digitale Schlüssel zueinander identisch sind, sofern der Schlüssel von der die Qualität bzw. die Herkunft des Gegenstands garantierenden Instanz geheim gehalten wird und somit die Authentifizierung des Gegenstands nur von solchen Stellen durchgeführt werden kann, die im Besitz des geheimen Schlüssels sind.

Bevorzugt wird jedoch zur Authentifizierung eine asymmetrische Verschlüsselung mit einem privaten Schlüssel als erstem Schlüssel und einem hierzu passenden öffentlichen Schlüssel als zweitem Schlüssel angewandt, da der öffentliche Schlüssel für jeden Dritten zugänglich gemacht werden kann, ohne dass die Sicherheit des Authentifizierungsverfahren beeinträchtigt wird.

Dabei ist der öffentliche Schlüssel besonders bevorzugt einem digitalen Zertifikat zugeordnet, das wiederum der die Qualität bzw. die Herkunft des Gegenstands garantierenden Instanz zugeordnet ist. Solche digitalen Zertifikate können in Servern in öffentlichen digitalen Netzwerken wie dem Internet hinterlegt und abgerufen werden. Dies bietet insbesondere den Vorteil, dass die digitalen Zertifikate zentral verwaltet und gegebenenfalls widerrufen werden können, wenn festgestellt wird, dass eine eindeutige Authentifizierung des Gegenstands nicht mehr möglich ist, weil beispielsweise der private Schlüssel bekannt geworden ist.

In einer weiteren bevorzugten Ausgestaltung des Verfahrens wird den Mitteln ein beliebiger Ausgangswert zugeführt, worauf hin sie einen verschlüsselten Ausgangswert ausgeben. So kann jeder Dritte einen zufällig ausgewählten Ausgangswert von den Mitteln verschlüsseln lassen und den erhaltenen verschlüsselten Wert durch den öffentlichen Schlüssel der die Qualität bzw. die Herkunft des Gegenstands garantierenden Instanz wieder entschlüsseln.

Ein Gegenstand, dessen Authentizität mit dem erfindungsgemäßen Verfahren geprüft werden kann, weist bevorzugt einen Computerchip auf, in dem ein nicht auslesbarer erster, kryptographischer Schlüssel gespeichert ist.

Dieser Computerchip sollte mit dem Gegenstand unlösbar verbunden sein, so dass er nicht ohne Weiteres abgelöst und für einen anderen Gegenstand verwendet werden kann.

Bevorzugt sollte der Computerchip am Gegenstand so befestigt sein, dass er zerstört wird, wenn er vom Gegenstand entfernt wird. Dies kann beispielsweise dadurch erfolgen, dass der Computerchip mit einer Spannungsversorgung verbunden ist, die unterbrochen wird, sobald der Computerchip vom Gegenstand entfernt wird, so dass der im Computerchip gespeicherte Schlüssel gelöscht wird oder reaktiviert werden muss. Eine Reaktivierung des Schlüssel kann bei einem Computerchip beispielsweise dadurch notwendig werden, dass der Schlüssel mit einer Aktivierungs-PIN gekoppelt ist und die Kopplung des Schlüssels mit dem PIN bei Unterbrechung der Stromversorgung aufgehoben wird, so dass der Computerchip so lange unbrauchbar bleibt, bis er durch die erneute Eingabe der Aktivierungs-PIN reaktiviert wird.

Eine andere Möglichkeit der Verbindung zwischen Computerchip und Gegenstand besteht darin, dass der Computerchip vom Gegenstand mindestens soweit umschlossen ist, dass der Gegenstand beschädigt oder zerstört wird, wenn der Computerchip entfernt wird. Dies macht insbesondere dann Sinn, wenn verhindert werden soll, dass der an einem Gegenstand befindliche Computerchip durch einen anderen Computerchip ersetzt wird.

Eine andere bevorzugte Befestigungsart besteht im Aufkleben des Computerchips auf den Gegenstand.

In einer weiteren bevorzugten Ausgestaltung wirkt der Computerchip als Transponder, empfängt kabellos mindestens einen Ausgangswert oder ein Startsignal und sendet mindestens einen verschlüsselten Ausgangswert bzw. ein Wertepaar mit einem Ausgangswert und einem verschlüsselten Ausgangswert aus. Insbesondere durch die kabellose und damit kontaktlose Datenübertragung wird das Authentifizieren erheblich vereinfacht, so dass selbst die Authentizität unzugänglich eingebauter Komponenten einer Vorrichtung ohne Weiteres authentifiziert werden können.

In ähnlicher Weise bevorzugt wird als Computerchip ein sogenannter Radio-Frequency-ID-Chip verwendet.

Um sicherzustellen, dass ein Teil oder alle Komponenten einer Vorrichtung Originalteile sind, können die entsprechenden Komponenten der Vorrichtung jeweils mit einem Computerchip versehen sein, wobei in allen Computerchips der identische erste Schlüssel gespeichert ist.

Auch ist es möglich, den am Gegenstand befindlichen privaten Schlüssel zu nutzen, um beispielsweise besondere Zustandsdaten zu erfassen und zu verschlüsseln. So können die am Gegenstand angebrachten Mittel beispielsweise so ausgestaltet sein, dass sie - beispielsweise in Fahrzeugen - mit einem Computersystem, insbesondere einem Fahrzeug- oder Motormanagementsystem - zusammenwirken, wobei sie Daten zur Laufleistung oder zur Betriebsdauer beispielsweise eines Motors empfangen und diesen Wert verschlüsselt wieder ausgeben, so dass hiermit die Verwendung des Gegenstands oder von Vorrichtungen, in denen der Gegenstand als Komponente eingesetzt ist, protokolliert werden kann.

In einer anderen Ausgestaltung einer Vorrichtung mit mindestens zwei als erfindungsgemäße Gegenstände ausgebildeten Komponenten sind alle zweiten Schlüssel digitalen Zertifikaten zugeordnet, wobei die digitalen Zertifikate den jeweiligen die Qualität bzw. Herkunft der Komponenten garantierenden Instanzen zugeordnet sind, und wobei alle digitalen Zertifikate mit einem übergeordneten Zertifikat signiert sind, das der die Qualität bzw. Herkunft der Vorrichtung garantierenden Instanz zugeordnet ist. Ganz grundsätzlich lassen sich Zertifikatshierarchien analog auf das erfindungsgemäße Verfahren übertragen. Beispielsweise können die Hierarchieebenen für ein Automobil den Fahrzeughersteller, den Fahrzeugteilehersteller und die Fahrzeugteile umfassen. Eine solche Hierarchie kann beispielsweise derart ausgestaltet sein, dass der Fahrzeughersteller digitale Zertifikate für die verschiedenen Fahrzeugteilehersteller ausstellt, und die Fahrzeugteilehersteller basierend auf ihrem Zertifikat weitere Zertifikate für die Fahrzeugteile ausstellen.

Wie sich bereits aus der Beschreibungseinleitung ergibt, besteht insbesondere im Ersatzteilhandel für Fahrzeuge ein besonderer Bedarf an einer hinreichenden Authentifizierung der Herkunft bzw. der Qualität von Ersatzteilen. Insofern wird das erfindungsgemäße Verfahren unter anderem bevorzugt für Fahrzeuge, insbesondere für Flugzeuge oder Automobile und deren Komponenten angewandt.

Es sind eine Vielzahl von Variationen der erfindungsgemäßen Verfahrensweise möglich. So ist es je nach Ausgestaltung der Mittel, die den ersten, nicht auslesbaren digitalen Schlüssel enthalten, möglich, dass darin weitere, den zu authentifizierenden Gegenstand betreffende Informationen, enthalten sind, wie beispielsweise eine Seriennummer, das Herstellungsdatum oder Ähnliches. Diese zusätzlichen Daten können in den Mitteln beispielsweise auch in durch den ersten Schlüssel verschlüsselter Form abgespeichert sein.

## Patentansprüche

1. Verfahren zum Authentifizieren eines Gegenstands, bei dem
a. der Gegenstand von einer die Qualität bzw. die Herkunft des Gegenstands garantierenden Instanz mit Mitteln versehen wird, die einen ersten, nicht auslesbaren, digitalen Schlüssel enthalten, wobei die Mittel einen Computerchip aufweisen, in dem der erste Schlüssel enthalten ist, und der Computerchip mit dem Gegenstand unlösbar verbunden wird,
b. zur Authentifizierung des Gegenstands ein Ausgangswert mit Hilfe der besagten Mittel mit dem ersten Schlüssel verschlüsselt wird,
c. der verschlüsselte Ausgangswert mit einem von der die Qualität bzw. die Herkunft des Gegenstands garantierenden Instanz herausgegebenen zweiten digitalen Schlüssel zu einem Endwert entschlüsselt wird, und
d. die Authentizität des Gegenstands bejaht wird, wenn der Ausgangswert mit dem Endwert übereinstimmt.

2. Verfahren nach Anspruch 1, **dadurch gekennzeichnet, dass** der erste Schlüssel ein privater Schlüssel und der hierzu passende zweite Schlüssel ein öffentlicher Schlüssel ist.

3. Verfahren nach Anspruch 2, **dadurch gekennzeichnet, dass** der öffentliche Schlüssel einem digitalen Zertifikat zugeordnet ist, das der die Qualität bzw. die Herkunft garantierenden Instanz zugeordnet ist.

4. Verfahren nach einem der Ansprüche 1 bis 3, **dadurch gekennzeichnet, dass** den Mitteln ein beliebiger Ausgangswert zugeführt werden kann und sie einen verschlüsseiten Ausgangswert ausgeben.

5. Gegenstand, der mit einem Verfahren nach einem der Ansprüche 1 bis 4 authentifizierbar ist, der von einer die Qualität bzw. die Herkunft des Gegenstands garantierenden Instanz mit Mitteln versehen ist, die einen Computerchip aufweisen, in dem ein erster, nicht auslesbarer, digitaler Schlüssel enthalten ist, wobei die Mittel geeignet sind, einen Ausgangswert mit dem ersten Schlüssel zu verschlüsseln. und wobei der Computerchip mit dem Gegenstand unlösbar verbunden ist, so dass die Authentizität des Gegenstands bejaht werden kann, wenn der verschlüsselte Ausgangswert mit einem von der Herkunft des Gegenstand garantierenden Instanz herausgegebenen zweiten digitalen Schlüssel zu einem Endwert entschlüsseit wird und der Ausgangwert mit dem Endwert übereinstimmt.

6. Gegenstand nach Anspruch 5, **dadurch gekennzeichnet, dass** der Computerchip so am Gegenstand befestigt ist, dass er zerstört wird, wenn er vom Gegenstand entfernt wird.

7. Gegenstand nach Anspruch 5 oder 6, **dadurch gekennzeichnet, dass** der Computerchip mit einer Spannungsversorgung verbunden ist, die unterbrochen wird, sobald der Computerchip vom Gegenstand entfernt wird, so dass der im Computerchip gespeicherte Schlüssel wahlweise gelöscht wird oder reaktiviert werden muss.

8. Gegenstand nach einem der Ansprüche 5 bis 7, **dadurch gekennzeichnet, dass** der Computerchip vom Gegenstand mindestens soweit umschlossen ist, dass der Gegenstand beschädigt oder zerstört wird, wenn der Computerchip entfernt wird.

9. Gegenstand nach einem der Ansprüche 5 bis 8, **dadurch gekennzeichnet, dass** der Computerchip auf den Gegenstand aufgelegt ist

10. Gegenstand nach einem der Ansprüche 5 bis 9, **dadurch gekennzeichnet, dass** der Computerchip als Transponder wirkt, kabellos mindestens einen Ausgangswert oder ein Startsignal empfängt und mindestens den verschlüsselten Ausgangswert bzw. ein Wertepaar mit einem Ausgangswert und einem verschlüsselten Ausgangswert aussendet.

11. Gegenstand nach einem der Ansprüche 5 bis 10, **gekennzeichnet durch** einen als Radio-Frequency-ID-Chip ausgebildeten Computerchip.

12. Vorrichtung mit mindestens zwei als Gegenstände gemäß einem der Ansprüche 5 bis 11 ausgebildeten Komponenten, **dadurch gekennzeichnet, dass** in allen Computerchips mit einem ersten Schlüssel zur Authentfizierurig der Komponenten der identische erste Schlüssel gespeichert ist.

13. Vorrichtung mit mindestens zwei als Gegenstände gemäß einem der Ansprüche 5 bis 11 ausgebildeten Komponenten, **dadurch gekennzeichnet, dass** alle zweiten Schlüssel digitalen Zertifikaten zugeordnet sind, wobei die digitalen Zertifikate den jeweiligen die Qualität bzw. Herkunft der Komponenten garantierenden Instanzen zugeordnet sind, und dass alle digitalen Zertifikate mit einem übergeordneten Zertifikat signiert sind, das der die Qualität bzw. Herkunft der Vorrichtung garantierenden Instanz zugeordnet ist.

14. Verwendung des Verfahrens gemäß einem der Ansprüche 1 bis 4 bzw. eines Gegenstands gemäß einem der Ansprüche 5 bis 11 für Fahrzeuge, insbesondere für Flugzeuge oder Automobile.

## Claims

1. Method for authenticating an article, in which
a. the article is provided with means which contain a first, non-readable, digital key by an entity which guarantees the quality or the origin of the article, the means having a computer chip which contains the first key, and the computer chip being non-detachably connected to the article,
b. the article is authenticated by encrypting an initial value with the first key using said means,
c. the encrypted initial value is decrypted with a second digital key, issued by the entity which guarantees the quality or the origin of the article, to form a final value, and
d. the authenticity of the article is affirmed if the initial value matches the final value.

2. Method according to Claim 1, **characterized in that** the first key is a private key and the second key, which matches with the first key, is a public key.

3. Method according to Claim 2, **characterized in that** the public key is associated with a digital certificate which is associated with the entity which guarantees the quality or the origin.

4. Method according to one of Claims 1 to 3, **characterized in that** an arbitrary initial value can be supplied to the means, and said means output an encrypted initial value.

5. Article which can be authenticated using a method according to one of Claims 1 to 4, which is provided with means which have a computer chip which contains a first, non-readable, digital key by an entity which guarantees the quality or the origin of the article, the means being suitable for encrypting an initial value with the first key, and the computer chip being non-detachably connected to the article, so that the authenticity of the article can be affirmed if the encrypted initial value is decrypted with a second digital key, issued by the entity which guarantees the origin of the article, to form a final value and the initial value matches the final value.

6. Article according to Claim 5, **characterized in that** the computer chip is mounted on the article such that it is destroyed if it is removed from the article.

7. Article according to Claim 5 or 6, **characterized in that** the computer chip is connected to a power supply which is interrupted as soon as the computer chip is removed from the article, so that the key stored in the computer chip is either erased or needs to be reactivated.

8. Article according to one of Claims 5 to 7, **characterized in that** the computer chip is enclosed by the article at least such that the article is damaged or destroyed if the computer chip is removed.

9. Article according to one of Claims 5 to 8, **characterized in that** the computer chip is adhesively bonded to the article.

10. Article according to one of Claims 5 to 9, **characterized in that** the computer chip acts as a transponder, wirelessly receives at least one initial value or a start signal and emits at least the encrypted initial value or a pair of values with an initial value and an encrypted initial value.

11. Article according to one of Claims 5 to 10, **characterized by** a computer chip in the form of a Radio Frequency ID chip.

12. Apparatus having at least two components which are in the form of articles according to one of Claims 5 to 11, **characterized in that** all the computer chips with a first key for authenticating the components store the identical first key.

13. Apparatus having at least two components which are in the form of articles according to one of Claims 5 to 11, **characterized in that** all the second keys are associated with digital certificates, the digital certificates being associated with the respective entities which guarantee the quality or origin of the components, and **in that** all the digital certificates are signed with a superordinate certificate which is associated with the entity which guarantees the quality or origin of the apparatus.

14. Use of the method according to one of Claims 1 to 4, or of an article according to one of Claims 5 to 11 for vehicles, particularly for aircraft or automobiles.

## Revendications

1. Procédé d'authentification d'un objet, selon lequel
a. l'objet est pourvu, par une instance garantissant la qualité ou l'origine de l'objet, de moyens qui comprennent une première clé numérique non lisible, sachant que les moyens présentent une puce informatique dans laquelle la première clé est contenue, et que la puce informatique est assemblée de manière inamovible à l'objet,
b. afin d'authentifier l'objet, une valeur initiale est codée avec la première clé à l'aide desdits moyens,
c. la valeur initiale codée est décodée avec une deuxième clé numérique délivrée par l'instance garantissant la qualité ou l'origine de l'objet, pour former une valeur finale, et
d. l'authenticité de l'objet est affirmée si la valeur initiale coïncide avec la valeur finale.

2. Procédé selon la revendication 1, **caractérisé en ce que** la première clé est une clé privée, et la deuxième clé correspondante est une clé publique.

3. Procédé selon la revendication 2, **caractérisé en ce que** la clé publique est associée à un certificat numérique qui est associé à l'instance garantissant la qualité ou l'origine de l'objet.

4. Procédé selon l'une des revendications 1 à 3, **caractérisé en ce qu'**une valeur initiale quelconque peut être apportée auxdits moyens, et ils délivrent une valeur initiale codée.

5. Objet, pouvant être authentifié avec un procédé selon l'une des revendications 1 à 4, qui est pourvu, par une instance garantissant la qualité ou l'origine de l'objet, de moyens qui présentent une puce informatique dans laquelle est contenue une première clé numérique non lisible, sachant que lesdits moyens sont capables de coder avec la première clé une valeur initiale, et sachant que la puce informatique est assemblée de manière inamovible à l'objet, de sorte que l'authenticité de l'objet peut être affirmée si la valeur initiale codée est décodée, pour former une valeur finale, avec une deuxième clé numérique délivrée par l'instance garantissant la qualité ou l'origine de l'objet, et si la valeur initiale coïncide avec la valeur finale.

6. Objet selon la revendication 5, **caractérisé en ce que** la puce informatique est fixée sur l'objet de telle sorte qu'elle est détruite si elle est retirée de l'objet.

7. Objet selon la revendication 5 ou 6, **caractérisé en ce que** la puce informatique est reliée à une alimentation électrique qui est interrompue dès que la puce informatique est retirée de l'objet, de sorte que la clé mémorisée dans la puce informatique, soit est effacée ou soit doit être réactivée.

8. Objet selon l'une des revendications 5 à 7, **caractérisé en ce que** la puce informatique est entourée par l'objet au moins suffisamment pour que l'objet soit endommagé ou détruit si la puce informatique est retirée.

9. Objet selon l'une des revendications 5 à 8, **caractérisé en ce que** la puce informatique est collée sur l'objet.

10. Objet selon l'une des revendications 5 à 9, **caractérisé en ce que** la puce informatique joue le rôle de transpondeur, reçoit sans câble au moins une valeur initiale ou un signal de mise en marche, et émet au moins la valeur initiale codée, ou une paire de valeurs comprenant une valeur initiale et une valeur initiale codée.

11. Objet selon l'une des revendications 5 à 10, **caractérisé par** une puce informatique réalisée sous forme de puce RFID (à identification par radiofréquence).

12. Dispositif avec au moins deux éléments réalisés sous la forme d'objets selon l'une des revendications 5 à 11, **caractérisé en ce que** la première clé identique est mémorisée dans toutes les puces informatiques dotées d'une première clé pour authentifier les éléments.

13. Dispositif avec au moins deux éléments réalisés sous la forme d'objets selon l'une des revendications 5 à 11, **caractérisé en ce que** toutes les deuxièmes clés sont associées à des certificats numériques, sachant que les certificats numériques sont associés aux instances respectives garantissant la qualité ou l'origine des éléments, et **en ce que** tous les certificats numériques sont signés par un certificat de niveau supérieur, qui est associé à l'instance garantissant la qualité ou l'origine du dispositif.

14. Utilisation du procédé selon l'une des revendications 1 à 4 ou d'un objet selon l'une des revendications 5 à 11 pour des véhicules, en particulier pour des avions ou des automobiles.
